# EUROPÄISCHE PATENTSCHRIFT

(11) **EP 3 443 288 B1**
(45) Veröffentlichungstag und Bekanntmachung des Hinweises auf die Patenterteilung: **07.10.2020**
(21) Anmeldenummer: 17728097.1
(22) Anmeldetag: 29.05.2017
(51) Int. Cl.: F28D 7/16, F28F 9/00, F28F 9/18, F22B 9/00

(54) **VERTIKALER WÄRMETAUSCHER**
VERTICAL HEAT EXCHANGER
ECHANGEUR DE CHALEUR VERTICAL

(30) Priorität: 09.06.2016 DE 102016210218
(43) Veröffentlichungstag der Anmeldung: 20.02.2019
(73) Patentinhaber: Siemens Aktiengesellschaft, 80333 München (DE)
(72) Erfinder: HAJE, Detlef, 02828 Görlitz (DE); TISCHER, Heiko, 02827 Görlitz (DE); MÜHLER, Jörg, 02826 Görlitz (DE); NÖNNIG, Martin, 02829 Königshain (DE)
(86) Internationale Anmeldenummer: PCT/EP2017/062823
(87) Internationale Veröffentlichungsnummer: WO 2017/211604

(56) Entgegenhaltungen:
- WO-A1-2006/064313
- DE-A1-102010 014 643
- GB-A- 2 064 092
- US-A- 2 349 792
- US-A- 2 966 340
- US-A- 3 216 749
- US-A- 3 916 990
- US-A- 4 465 129
- US-A1- 2004 194 932
- US-B1- 6 269 867

## Beschreibung

Die vorliegende Erfindung betrifft einen vertikalen Wärmetauscher, aufweisend ein Wärmetauschvolumen, das an entgegengesetzten Enden von einem oberen Rohrboden und einem unteren Rohrboden des Wärmetauschers begrenzt ist, und ein homogenes Rohrbündel, wobei das Rohrbündel eine Vielzahl von Wärmetauscherrohren, die zueinander regelmäßig angeordnet sind, aufweist und sich im Inneren des Wärmetauschvolumens zwischen dem unteren Rohrboden und dem oberen Rohrboden erstreckt, wobei ferner die Wärmetauscherrohre durch ein erstes Medium durchströmbar sind und im restlichen Wärmetauschvolumen zumindest ein zweites Medium anordenbar ist, und wobei ein Wärmeaustausch zwischen dem ersten und dem zumindest einen zweiten Medium durchführbar ist.

Wärmetauscher werden in der modernen Technik eingesetzt, um Wärme zwischen unterschiedlichen Medien zu übertragen. So werden als derartige Wärmetauscher zum Beispiel Heizkondensatoren in Kraftwerksanlagen verwendet, um Wärmeenergie von Wasserdampf, der im Kraftwerk zumeist durch Verbrennungsvorgänge erzeugt wird, in ein Wärmeträgermedium beispielsweise eines Fernwärmenetzes zu transferieren.

Dabei werden oftmals horizontale Wärmetauscher eingesetzt, in denen die wärmeenergietragenden Medien in waagrechter Richtung den Wärmetauscher durchströmen. Derartige horizontale Wärmetauscher weisen dabei jedoch einen hohen Bauraumbedarf auf. Um dies zu umgehen ist es bekannt, Wärmetauscher auch in einer vertikalen Bauweise auszuführen, in der die wärmeenergietragenden Medien den Wärmetauscher in senkrechter Richtung durchströmt. Derartige stehende Wärmetauscher weisen beispielsweise auch den Vorteil auf, dass eine Regelung einer Heizleistung insbesondere durch ein Fluten des Wärmetauschers mit einem Kondensat erfolgen kann. Vertikale Wärmetauscher nach dem Oberbegriff des Anspruchs sind aus dem Dokument US 2004/0194932 A1 bekannt.

Insbesondere in diesem Kondensat kann es jedoch zu Ausdampfungseffekten kommen, beispielsweise bei einem plötzlich auftretenden Lastwechsel, wodurch Dampfblasen entstehen, die eine Beschädigung des Wärmetauschers, insbesondere der verwendeten Wärmetauscherrohre, verursachen können. Um gleichzeitig dennoch eine hohe Stabilität der Wärmetauscherrohre sicherstellen zu können, sind bekannte vertikale Wärmetauscher daher oftmals mit aufwendigen und kostenintensiven Gitterstützkonstruktionen ausgestattet, da die in den horizontalen Wärmetauscher eingesetzten Stützwände für die bei den Ausdampfungseffekten entstehenden Dampfblasen nicht durchgängig sind und daher in vertikalen Wärmetauscher nicht eingesetzt werden können. Auch ein Einsatz einer größeren Rohrteilung, die dabei insbesondere einen vergrößerten Bauraumbedarf mit sich bringt, ist durch diese Gitterstützkonstruktionen erforderlich.

Es ist daher Aufgabe der vorliegenden Erfindung, die voranstehend beschriebenen Probleme bei Wärmetauscher zumindest teilweise zu lösen. Insbesondere ist es Aufgabe der Erfindung, einen vertikalen Wärmetauscher bereitzustellen, der in einfacher und insbesondere kostengünstiger Art und Weise eine besonders effektive und gleichzeitig bauraum- und kostensparende Vermeidung einer Beschädigung des Wärmetauschers, insbesondere eines Rohrbündels des Wärmetauschers, durch Ausdampfungseffekte ermöglicht.

Voranstehende Aufgabe wird gelöst durch einen vertikalen Wärmetauscher mit den Merkmalen des unabhängigen Anspruchs 1. So wird die Aufgabe gelöst durch einen vertikalen Wärmetauscher, aufweisend ein Wärmetauschvolumen, das an entgegengesetzten Enden von einem oberen Rohrboden und einem unteren Rohrboden des Wärmetauschers begrenzt ist, und ein homogenes Rohrbündel, wobei das Rohrbündel eine Vielzahl von Wärmetauscherrohren, die zueinander regelmäßig angeordnet sind, aufweist und sich im Inneren des Wärmetauschvolumens zwischen dem unteren Rohrboden und dem oberen Rohrboden erstreckt, wobei ferner die Wärmetauscherrohre durch ein erstes Medium durchströmbar sind und im restlichen Wärmetauschvolumen zumindest ein zweites Medium anordenbar ist, und wobei ein Wärmeaustausch zwischen dem ersten Medium und dem zumindest einen zweiten Medium durchführbar ist. Ein erfindungsgemäßer vertikaler Wärmetauscher ist dadurch gekennzeichnet, dass im Rohrbündel Ausgleichsvolumina angeordnet sind, wobei die Ausgleichsvolumina innerhalb des Rohrbündels das Wärmetauschvolumen durchziehen.

Bei einem erfindungsgemäßen Wärmetauscher handelt es sich insbesondere um einen vertikalen Wärmetauscher, das heißt, eine Strömungsrichtung des ersten und/oder des zumindest einen zweiten Mediums im Wärmetauscher ist senkrecht oder, insbesondere beim zweiten Medium zumindest im Wesentlichen senkrecht, orientiert, beispielsweise von unten nach oben. Besonders bevorzugt kann ein erfindungsgemäßer Wärmetauscher dabei als ein Heizkondensator ausgebildet sein. Ein erfindungsgemäßer vertikaler Wärmetauscher weist dafür insbesondere ein Wärmetauschvolumen auf, das beispielsweise bei einer zylindrischen Ausgestaltung einen Durchmesser von 300mm bis mehrere Meter und eine Höhe von einem bis mehrere Meter aufweisen kann. In diesem Wärmetauschvolumen erfolgt ein Transfer von Wärmeenergie bevorzugt vom zumindest einen zweiten Medium, das die Wärmetauscherrohre umgibt, in das erste Medium, das im Inneren der Wärmetauscherrohre strömt. Als zweites Medium kann dabei beispielsweise Wasserdampf, als erstes Medium eine für einen Weitertransport der Wärmeenergie geeignete Flüssigkeit eingesetzt werden. Die Wärmetauscherrohre, die bevorzugt identisch oder zumindest im Wesentlichen identisch ausgebildet sind und deren Anzahl oftmals mehrere 1000 Rohre übersteigt, sind dabei insbesondere in einem homogenen Rohrbündel angeordnet. Homogen im Sinne der Erfindung kann dabei insbesondere bedeuten, dass die Wärmetauscherrohre zueinander regelmäßig angeordnet sind, das heißt, dass sie in wiederkehrenden, gleichen Abständen zueinander angeordnet sind. Auch eine Anordnung der Wärmetauscherrohre parallel oder zumindest im Wesentlichen parallel zueinander kann oftmals vorgesehen sein. Eine mögliche derartige homogene Anordnung ist beispielsweise eine hexagonal-symmetrische Anordnung. Dadurch kann eine möglichst dichte Anordnung von Wärmetauscherrohren im Rohrbündel erreicht werden, wodurch möglichst viele Wärmetauscherrohre im jeweiligen Wärmetauschvolumen angeordnet werden können. Dabei sind die Wärmetauscherrohre jeweils auch mit einem Abstand zueinander angeordnet, um ein Anordnen des zumindest einen zweiten Mediums in den sich zwischen den Wärmetauscherrohren des Rohrbündels bildenden Zwischenräumen zu ermöglichen. Bevorzugt werden dadurch die Wärmetauscherrohre zumindest abschnittsweise vom zumindest einen zweiten Medium umschlossen. Ein besonders guter Transfer von Wärmeenergie zwischen dem ersten und dem zumindest einen zweiten Medium kann dadurch für alle Wärmetauscherrohre sichergestellt werden. Das Rohrbündel, und damit die Wärmetauscherrohre, erstrecken sich vom unteren Rohrboden bis zum oberen Rohrboden und damit in senkrechter bzw. vertikaler Richtung durch das gesamte Wärmetauschvolumen. Die einzelnen Wärmetauscherrohre können sich dabei durch den unteren Rohrboden bzw. den oberen Rohrboden erstrecken oder in diesen fluidkommunizierend zu einer oder mehreren Sammelleitungen verbunden sein.

Erfindungswesentlich ist bei einem erfindungsgemäßen Wärmetauscher vorgesehen, dass im Rohrbündel Ausgleichsvolumina angeordnet sind. Diese Ausgleichsvolumina sind dabei Bereiche im Inneren des Wärmetauschvolumens und insbesondere auch innerhalb des Rohrbündels, die nicht von einem Wärmetauscherrohr belegt sind und somit von dem zumindest einen zweiten Medium ausgefüllt werden können. Sie können dabei bevorzugt parallel oder zumindest im Wesentlichen parallel zu den Wärmetauscherrohren angeordnet sein. Ferner stellen die Ausgleichsvolumina Bereiche dar, die abweichend von den standardmäßigen Zwischenräumen zwischen den Wärmetauscherrohren sind. D.h., ein Ausgleichsvolumen ist räumlich größer als der Zwischenraum, der durch benachbarte Wärmetauscherrohre aufgespannt wird. Die Ausgleichsvolumina sind insbesondere derartig dimensioniert, dass ihr Volumen größer ist, insbesondere mehr als doppelt so groß ist, wie das Volumen eines Zwischenraums, der durch benachbarte Wärmetauscherrohre aufgespannt wird. Dabei sind diese Ausgleichsvolumina gemäß der Erfindung derart ausgebildet, dass sie innerhalb des Rohrbündels das Wärmeaustauschvolumen durchziehen, insbesondere vollständig durchziehen. Mit anderen Worten erstrecken sich diese Ausgleichsvolumina durchgehend vom unteren Rohrboden bis zum oberen Rohrboden. Dies bringt insbesondere einen wesentlichen Vorteil mit sich. Bei einem Einsatz eines gas- und/oder dampfförmigen zweiten Mediums kommt es im Wärmetauschvolumen zumeist zu Kondensationseffekten. Dies ist dabei sogar vorteilhaft, da dadurch ein besonders guter Transfer von Wärmeenergie in das in den Wärmetauscherrohren strömende erste Medium erfolgt. Das dabei entstehende Kondensat sammelt sich im unteren Teil des Wärmetauschvolumens. Ferner kann über eine Steuerung bzw. Regelung eines Füllstands des Wärmetauschvolumens mit Kondensat eine besonders einfache und effektive Regelung einer Übertragungsleistung eines erfindungsgemäßen Wärmetauschers bereitgestellt werden. In diesem Kondensat kann es, insbesondere beispielsweise bei plötzlichen Lastwechseln, zu Ausdampfungseffekten kommen. Dabei entstehen im Kondensat Dampfblasen, durch die ein sogenannter Kondensatschlag verursacht werden kann. Durch diesen Kondensatschlag, der beispielsweise durch ein Implodieren dieser Dampfblasen im Kondensat erzeugt wird, können durch die dabei entstehenden Druckwellen im Kondensat Schädigungen im Wärmetauscher, insbesondere an den Wärmetauscherrohren, entstehen. Durch die erfindungsgemäß vorgesehenen Ausgleichsvolumina können jedoch diese Dampfblasen im Kondensat schnell und ungehindert nach oben steigen. Dadurch erreichen die Dampfblasen besonders schnell die Oberfläche des Kondensats, wodurch ein Implodieren der Dampfblasen innerhalb des Kondensats verhindert werden kann. Eine zuverlässige Vermeidung der schädigenden Vorgänge, die durch diesen Kondensatschlag ausgelöst werden, kann auf diese Weise durch das Vorhandensein der das gesamte Rohrbündel durchziehenden Ausgleichsvolumina sicher vermieden werden.

Ferner kann bei einem erfindungsgemäßen vertikalen Wärmetauscher vorgesehen sein, dass das Rohrbündel im Inneren des Wärmetauschvolumens durch zumindest eine horizontale Stützwand stabilisiert ist, wobei sich die Ausgleichsvolumina durch die zumindest eine Stützwand erstrecken. Wie oben bereits beschrieben kann sich das Wärmetauschvolumen eines erfindungsgemäßen Wärmetauschers über eine Höhe von über zehn Metern erstrecken. Um eine Stabilität des im Wärmetauschvolumen angeordneten Rohrbündels zu verbessern, kann daher zumindest eine Stützwand vorgesehen sein, die horizontal im Inneren des Wärmetauschvolumens angeordnet ist. Bevorzugt erstreckt sich eine derartige Stützwand über einen gesamten inneren Querschnitt des Wärmetauschvolumens. Dies kann dadurch ermöglicht werden, dass, neben den Wärmetauscherrohren des Rohrbündels, auch die Ausgleichsvolumina durch die zumindest eine Stützwand erstrecken. Mit anderen Worten weist die zumindest eine Stützwand im Bereich des jeweiligen Ausgleichsvolumens eine vertikale, durchgängige Öffnung auf. Eine Dampfblase im Kondensat kann somit durch die Stützwand hindurch im Kondensat aufsteigen und wird nicht von der Stützwand aufgehalten. Auf diese Weise kann durch die Stützwand zum einen eine hohe Stabilität für das Rohrbündel und damit den gesamten vertikalen Wärmetauscher bereitgestellt werden, ohne auf der anderen Seite die Vorteile, die durch die Ausgleichsvolumina bereitgestellt werden, zu vermindern. Ein erfindungsgemäßer vertikaler Wärmetauscher kann somit durch einen Einsatz von erfindungsgemäß ausgebildeten Stützwänden weiter verbessert werden. Insbesondere kann durch diesen Einsatz von Stützwänden, die mechanisch einfach sind und eine einfache Montage ermöglichen, auch auf einen Einsatz von aufwendigen, kosten- und montageintensiven Gitterkonstruktionen verzichtet werden.

Zudem ist bei einem erfindungsgemäßen vertikalen Wärmetauscher vorgesehen, dass zumindest eines der Ausgleichsvolumina dem Raum eines Wärmetauscherrohrs oder mehrerer, benachbart angeordneter Wärmetauscherrohre im homogenen Rohrbündel entspricht oder zumindest im Wesentlichen entspricht. Dies kann besonders einfach dadurch bereitgestellt werden, dass eines der Wärmetauscherrohre bzw. eine Gruppe benachbart angeordneter Wärmetauscherrohre bei der Bildung des Rohrbündels ausgelassen bzw. weggelassen werden. Eine Nutzung des dadurch entstehenden Freiraums im Rohrbündel als Ausgleichsvolumen kann somit besonders einfach durchgeführt werden. Insbesondere kann ein Einbringen der Ausgleichsvolumina in das Rohrbündel dadurch besonders einfach ermöglicht werden, da keine zusätzlichen Strukturen im Rohrbündel vorgesehen werden oder vorhanden sein müssen.

Ferner kann ein erfindungsgemäßer vertikaler Wärmetauscher dahingehend weiterentwickelt sein, dass die zumindest eine horizontale Stützwand im Bereich der Ausgleichsvolumina derart ausgebildet ist, dass die Ausgleichsvolumina dort aufgeweitet sind, wobei zumindest eines der Ausgleichsvolumina dem Raum mehrerer, benachbart angeordneter Wärmetauscherrohre im homogenen Rohrbündel entspricht oder zumindest im Wesentlichen entspricht.. Aufgeweitet im Sinne der Erfindung kann dabei insbesondere bedeuten, dass ein Querschnitt des jeweiligen Ausgleichsvolumens im Bereich der zumindest einen Stützwand vergrößert ist. Auf diese Weise kann bereitgestellt werden, dass die im Kondensat aufsteigenden Dampfblasen durch die zumindest eine Stützwand noch einfacher und ohne großen Widerstand hindurchsteigen können. Eine Beeinflussung einer aufsteigenden Bewegung der Dampfblasen im Kondensat durch die zumindest eine Stützwand kann dadurch nochmals vermindert, insbesondere sogar gänzlich vermieden werden. Bei einem Ausgleichsvolumen, das dem Raum mehre, benachbart angeordneter Wärmetauscherrohre entspricht kann diese Aufweitung dabei besonders einfach bereitgestellt werden, beispielsweise durch ein Entfernen von Stegen in der Stützwand, die in der Stützwand zum Stabilisieren zwischen den ausgelassenen Wärmetauscherrohren vorhanden sind.

Ferner kann ein erfindungsgemäßer vertikaler Wärmetauscher dahingehend ausgebildet sein, dass zumindest eines der Ausgleichsvolumina benachbart zu einem festen Einbau, insbesondere einem Zuganker oder einer Evakuierungsvorrichtung, angeordnet ist. Feste Einbauten sind bereits im Inneren des Wärmetauschvolumens vorhandene Elemente, die im Inneren des Rohrbündels angeordnet sind und sich oftmals über die gesamte Höhe des Wärmetauschvolumens vom unteren Rohrboden bis zum oberen Rohrboden erstrecken. Als Beispiele seien hier Zuganker, die eine Stabilität des Wärmetauschers über seine gesamte Höhe verbessern, oder auch Evakuierungsvorrichtungen, die zum Beispiel zur Druckregulierung im Wärmetauschvolumen und/oder zum Abtransport von nicht erwünschten Medien, beispielsweise nicht kondensierbaren Gasen, eingesetzt werden können, genannt. Derartige feste Einbauten stellen dabei bereits Unterbrechungen der Homogenität des Rohrbündels dar. Durch eine Anordnung zumindest eines der Ausgleichsvolumina benachbart zu diesem festen Einbau, kann dies ausgenützt werden. Für das Anordnen des festen Einbaus wurden bereits Wärmetauscherrohre aus dem Rohrbündel entfernt, wobei oftmals nicht das gesamte frei werdende Volumen durch den festen Einbau verwendet wird. Insbesondere kann dadurch beispielsweise benachbart zu einem derartigen festen Einbau durch ein weiteres Auslassen eines oder mehrerer Wärmetauscherrohre besonders einfach ein besonders großes Ausgleichsvolumen geschaffen werden

Auch kann bei einem erfindungsgemäßen vertikalen Wärmetauscher ferner vorgesehen sein, dass zumindest eines der Ausgleichsvolumina an einem Randbereich des Rohrbündels angeordnet ist. Auch ein Randbereich des Rohrbündels stellt, wie die oben beschriebenen festen Einbauten, einen Bereich dar, in dem eine Anordnung der Wärmetauscherrohre an äußere Gegebenheiten angepasst werden muss. Auch an diesen Randbereichen kann es dabei vorkommen, dass somit Wärmetauscherrohre ausgelassen werden, ohne dass ein dadurch freiwerdendes Volumen genützt wird. Durch ein Anordnen eines Ausgleichsvolumens an einer derartigen Stelle, beispielsweise durch Aussparungen in einer horizontalen Stützwand kann eine derartige Vergrößerung bzw. Anordnung der Ausgleichsvolumina am Rand des Rohrbündels besonders einfach bereitgestellt werden

Darüber hinaus kann ein erfindungsgemäßer vertikaler Wärmetauscher dahingehend ausgebildet sein, dass ein Abstand zwischen den Ausgleichsvolumina auf einen Wert begrenzt ist, der einem 15-Fachen, bevorzugt einem 10-Fachen, besonders bevorzugt einem 5-Fachen eines Durchmessers der Wärmetauscherrohre entspricht. Auf diese Weise kann besonders einfach sichergestellt werden, dass, unabhängig von einem Entstehungsort einer Dampfblase im Rohrbündel, ein Ausgleichsvolumen für ein gefahrloses Aufsteigen der Dampfblase im Kondensat in der Nähe zur Verfügung steht. Ein besonders sicheres Betreiben eines erfindungsgemäßen vertikalen Wärmetauschers kann dadurch ermöglicht werden.

Alternativ oder zusätzlich kann bei einem erfindungsgemäßen vertikalen Wärmetauscher vorgesehen sein, dass die Ausgleichsvolumina gleichmäßig oder zumindest im Wesentlichen gleichmäßig im Rohrbündel verteilt sind. Besonders bevorzugt kann dabei vorgesehen sein, dass die gleichmäßige Verteilung der Ausgleichsvolumina im Rohrbündel der homogenen Anordnung der Wärmetauscherrohre im Rohrbündel angepasst ist bzw. dieser entspricht. Dadurch kann besonders einfach sichergestellt werden, dass für jeden beliebigen Ort einer Entstehung einer Dampfblase innerhalb des Rohrbündels ein Ausgleichsvolumen in unmittelbarer Nähe oder zumindest in naher Umgebung für ein Aufsteigen der Dampfblase im Kondensat zur Verfügung steht. Eine Gefahr einer Beschädigung der Wärmetauscherrohre durch einen Kondensatschlag kann dadurch weiter vermindert werden.

Auch kann ein erfindungsgemäßer vertikaler Wärmetauscher dahingehend ausgebildet sein, dass nahe am oberen Rohrboden an einem oberen Ende der Wärmetauscherrohre eine Wandstärke der Wärmetauscherrohre verstärkt ist, insbesondere um einen Faktor 3 oder mehr verstärkt ist, ohne einen inneren Querschnitt der Wärmetauscherrohre zu verkleinern oder ohne einen inneren Querschnitt der Wärmetauscherrohre zumindest im Wesentlichen zu verkleinern. Diese Ausgestaltung eines erfindungsgemäßen vertikalen Wärmetauschers ist insbesondere für diejenigen Einsatzgebiete von Vorteil, in denen ein Fluten des Wärmetauschvolumens bis in die Nähe des oberen Rohrbodens erfolgt oder zumindest erfolgen kann. In diesem Fall kommt es an den oberen Enden der Wärmetauscherrohre unweigerlich oftmals zu einem Platzen bzw. Kollabieren der Dampfblasen im Kondensat, da die Dampfblasen nicht weiter aufsteigen können. Durch eine lokale Verstärkung einer Wandstärke der Wärmetauscherrohre in diesem Bereich, insbesondere um einen Faktor drei oder mehr, kann dennoch eine Beschädigung der Wärmetauscherrohre vermindert oder sogar gänzlich verhindert werden. Dadurch, dass durch die Verstärkung ein innerer Querschnitt der Wärmetauscherrohre nicht oder zumindest im Wesentlichen nicht verkleinert wird, kann auch eine negative Beeinflussung einer Strömung des ersten Mediums in den Wärmetauscherrohren verhindert werden. Die Verstärkung der Wandstärke erfolgt somit auf den Außenseiten der Wärmetauscherrohre.

Bevorzugt kann ein erfindungsgemäßer vertikaler Wärmetauscher dabei derart weiterentwickelt sein, dass die Wandstärke der Wärmetauscherrohre auf einer Länge von mehr als 50mm, bevorzugt von mehr als 100mm, verstärkt ist. Diese Länge wird dabei insbesondere vom oberen Rohrboden nach unten gemessen. Eine derartige Verstärkung der Wandstärke auf einer Länge von mehr als 50mm, besser noch mehr als 100mm, kann dabei sicherstellen, dass ein ausreichender Schutz der oberen Enden der Wärmetauscherrohre vor Kondensatschlag besteht, auch wenn das gesamte oder fast gesamte Wärmetauschvolumen mit Kondensat geflutet ist.

Gemäß einer ersten alternativen Weiterentwicklung eines erfindungsgemäßen vertikalen Wärmetauschers kann dabei vorgesehen sein, dass die Wandstärke durch ein am Ende des jeweiligen Wärmetauscherrohrs axial angeordnetes, insbesondere angeschweißtes, Zusatzrohr verstärkt ist. Mit anderen Worten wird durch das Zusatzrohr das jeweilige Wärmetauscherrohr an seinem oberen Ende und damit nahe dem oberen Rohrboden verlängert. Das Zusatzrohr überbrückt dabei einen Zwischenraum zwischen einem oberen Ende des jeweiligen Wärmetauscherrohrs und dem oberen Rohrboden. Ein Austreten des ersten Mediums kann somit verhindert werden. Dabei kann sich das Zusatzrohr auch in beziehungsweise durch den Rohrboden erstrecken. Das Zusatzrohr weist dabei bevorzugt eine größere Wandstärke als das jeweilige Wärmetauscherrohr auf. Durch eine geeignete Wahl einer Wandstärke der Zusatzrohre kann eine Einstellung der Größe der Verstärkung der Wandstärke der jeweiligen Wärmetauscherrohre bereitgestellt werden. Ein Anschweißen der Zusatzrohre stellt dabei ein besonders festes und dauerhaftes Anordnen der Zusatzrohre am jeweiligen Wärmetauscherrohr dar. Gemäß einer zweiten, bevorzugten alternativen Weiterentwicklung kann bei einem erfindungsgemäßen vertikalen Wärmetauscher vorgesehen sein, dass die Wandstärke des jeweiligen Wärmetauscherrohrs durch ein Verstärkungsrohr verstärkt ist, das koaxial zum jeweiligen Wärmetauscherrohr angeordnet ist und dieses radial umfasst. Auf diese Weise muss für jedes zu schützende Wärmetauscherrohr nur ein einziges weiteres Bauteil vorgesehen werden, um eine entsprechende Verstärkung der Wandstärke des Wärmetauscherrohrs bereitzustellen. Dabei wird das Verstärkungsrohr außen um das Wärmetauscherrohr angeordnet, insbesondere koaxial, wobei das Verstärkungsrohr das Wärmetauscherrohr vollständig umfasst und umgibt. Durch eine geeignete Wahl einer Wandstärke des Verstärkungsrohrs ergibt sich automatisch die Verstärkung der Wandstärke des Wärmetauscherrohrs. Eine besonders einfache Verstärkung einer Wandstärke der Wärmetauscherrohre kann auf diese Weise bereitgestellt werden.

Bevorzugt kann ein erfindungsgemäßer vertikaler Wärmetauscher dahingehend weiterentwickelt werden, dass das jeweilige Verstärkungsrohr kraft- und/oder stoffschlüssig in und/oder am jeweiligen Wärmetauscherrohr und/oder am Rohrbündel und/oder am oberen Rohrboden befestigt ist. So können die Verstärkerrohre beispielsweise bündig mit oder versenkt im oberen Rohrboden angeordnet und befestigt werden. Ferner kann beispielsweise ein Einwalzen der Verstärkungsrohre im oberen Rohrboden vorgenommen werden oder es kann durch ein hydraulisches Aufweiten bei der Anordnung die Verstärkungsrohre an die jeweiligen Wärmetauscherrohre gepresst werden. Auch ein Anschweißen der Verstärkungsrohre am jeweiligen Wärmetauscherrohr und/oder am oberen Rohrboden ist denkbar. Insgesamt kann durch das kraft- und/oder stoffschlüssige Befestigen ein sicherer Halt der Verstärkungsrohre am jeweiligen Wärmetauscherrohr sichergestellt werden. Ein ungewolltes Entfernen der Verstärkungsrohre von der jeweiligen Position kann dadurch vermieden werden. Ein Schutz der Wärmetauscherrohre vor einer Beschädigung, insbesondere beispielsweise durch Kondensatschlag, kann dadurch besonders zuverlässig bereitgestellt werden.

Gemäß einer weiteren Weiterentwicklung eines erfindungsgemäßen Wärmetauschers kann ferner vorgesehen sein, dass ein Zwischenraum zwischen dem Verstärkungsrohr und dem jeweiligen Wärmetauscherrohr kleiner ist als 0,5mm, insbesondere kleiner 0,2mm, bevorzugt 0,0mm. Durch einen verschwindenden Zwischenraum, also einem Abstand zwischen einer Innenfläche des Verstärkungsrohrs und einer Außenfläche des jeweiligen Wärmetauscherrohrs von 0,0mm kann ein besonders guter Schutz des Wärmetauscherrohrs bereitgestellt werden, da keine Dampfblase zwischen das Verstärkungsrohr und das Wärmetauscherrohr eindringen kann. Da diese Passgenauigkeit jedoch nicht immer bereitgestellt werden kann und da darüber hinaus dadurch auf eine Montage der Verstärkungsrohre erschwert werden kann, reicht es oftmals für eine ausreichende Sicherheit vor Kondensatschlägen aus, wenn der Zwischenraum klein ist, beispielsweise kleiner als 0,5mm, bevorzugt kleiner als 0,2mm. Dabei haben sich diese Werte als besonders geeignet herausgestellt, um zum einen eine leichte Montierbarkeit der Verstärkungsrohre bereitstellen zu können und gleichzeitig zum anderen eine Fähigkeit der Verstärkungsrohre, das jeweilige Wärmetauscherrohr vor Kondensatschlägen zu schützen, sicherstellen zu können.

Besonders bevorzugt kann ein erfindungsgemäßer vertikaler Wärmetauscher dahingehend weiterentwickelt sein, dass der Zwischenraum zwischen dem Verstärkungsrohr und dem jeweiligen Wärmetauscherrohr am unteren Ende des Verstärkungsrohrs durch ein Verschlussmaterial, insbesondere einem Lot und/oder einem Kunststoff, verschlossen ist. Wie oben beschrieben, kann ein Zwischenraum zwischen dem Verstärkungsrohr und dem jeweiligen Wärmetauscherrohr nicht immer vermieden werden oder ist sogar vorgesehen, um beispielsweise eine Montage der Verstärkungsrohre zu erleichtern. In diesem Fall ist bevorzugt vorgesehen, diesen Zwischenraum durch ein Verschlussmaterial am unteren Ende des Verstärkungsrohrs, also am vom oberen Rohrboden abgewandten Ende des Verstärkungsrohrs, zu verschließen. Als Verschlussmaterial kann dabei bevorzugt ein Lot oder ein Kunststoff, insbesondere ein kapillarwirksamer Kunststoff, verwendet werden. Auf diese Weise kann erreicht werden, dass der Zwischenraum zwischen dem Verstärkungsrohr und dem jeweiligen Wärmetauscherrohr zumindest am unteren Ende des Verstärkungsrohrs verschlossen und damit für im Kondensat aufsteigende Dampfblasen unzugänglich ist. Ein Eindringen einer Dampfblase in diesen Zwischenraum kann somit sicher verhindert werden. Alle Vorteile, die oben für einen verschwindenden Zwischenraum beschrieben worden sind, ergeben sich somit auch für einen Zwischenraum, der durch ein Verschlussmaterial am unteren Ende des Verstärkungsrohrs verschlossen ist.

Die vorliegende Erfindung wird weiterhin anhand der beiliegenden Zeichnungen beschrieben. Elemente mit gleicher Funktion und Wirkungsweise sind in den Figuren 1 bis 7 jeweils mit denselben Bezugszeichen versehen. Es zeigen jeweils schematisch:
- Figur 1: einen erfindungsgemäßen vertikalen Wärmetauscher,
- Figur 2: eine erste Ausgestaltungsform von Ausgleichsvolumina innerhalb eines Rohrbündels,
- Figur 3: eine zweite Ausgestaltungsform von Ausgleichsvolumina innerhalb eines Rohrbündels,
- Figur 4: eine dritte Ausgestaltungsform von Ausgleichsvolumina innerhalb eines Rohrbündels,
- Figur 5: eine vierte Ausgestaltungsform von Ausgleichsvolumina innerhalb eines Rohrbündels,
- Figur 6: eine Anordnung eines Verstärkungsrohrs an einem Wärmetauscherrohr, und
- Figur 7: eine Anordnung eines Zusatzrohrs an einem Wärmetauscherrohr.

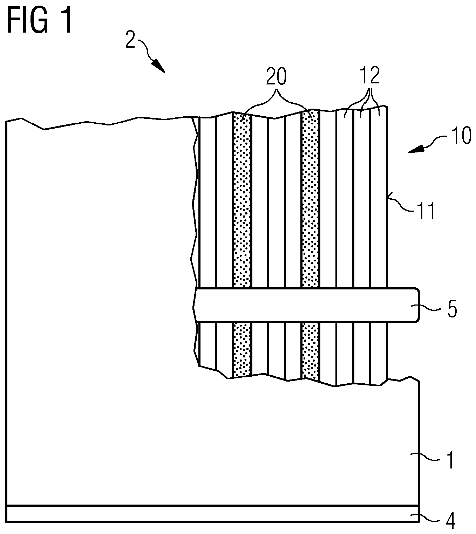

In Fig. 1 ist ein Teil eines erfindungsgemäßen vertikalen Wärmetauschers 1 gezeigt. Dabei ist insbesondere ein unterer Teil eines Wärmetauschvolumens 2 abgebildet, wobei ein unterer Rohrboden 4 den unteren Abschluss des Wärmetauschvolumens 2 bildet. Im Inneren des Wärmetauschvolumens 2 ist ein homogenes Rohrbündel 10 angeordnet, das eine Vielzahl von Wärmetauscherrohren 12 aufweist. Diese Wärmetauscherrohre 12 sind zur Bildung des homogenen Rohrbündels 10 regelmäßig angeordnet, beispielsweise in einer hexagonal-symmetrischen Anordnung. Von diesem Rohrbündel 10 ist ein Randbereich 11 sichtbar. Die Wärmetauscherrohre 12 und damit das gesamte Rohrbündel 10 erstrecken sich bis zum oberen Rohrboden 3 (nicht mit abgebildet), der den oberen Abschluss des Wärmetauschvolumens 2 des vertikalen Wärmetauschers 1 bildet. Die Wärmetauscherrohre 12 gehen dabei durch den unteren Rohrboden 4 und den oberen Rohrboden 3 hindurch oder werden in diesen zu einem oder mehreren Sammelleitungen fluidkommunizierend zusammengefasst. Ferner ist eine Stützwand 5 abgebildet, die sich horizontal im Inneren des Wärmetauschvolumens 2 erstreckt und die für eine Stabilisierung der Wärmetauscherrohre 12 ausgebildet ist. Im Inneren der Wärmetauscherrohre 12 strömt ein erstes Medium, das durch ein zweites Medium, das im restlichen Wärmetauschvolumen 2 angeordnet ist und somit die Wärmetauscherrohre 12 umgibt, erwärmt, insbesondere aufgeheizt, wird. Das zweite Medium kann dabei oftmals dampf- oder gasförmig vorliegen. In diesem Fall kann ein Teil des zweiten Mediums auch als Kondensat vorliegen, das sich im unteren Teil des Wärmetauschvolumens 2 sammelt. Auch ein geregeltes Fluten des Wärmetauschvolumens 2 mit diesem Kondensat kann vorgenommen werden, insbesondere beispielsweise um eine Heizleistung des erfindungsgemäßen vertikalen Wärmetauschers 1 zu steuern. Dabei kann es, beispielsweise bei plötzlichen Lastwechseln, zu Ausdampfungseffekten im Kondensat kommen, wodurch eine Beschädigung insbesondere der Wärmetauscherrohre 12 durch Kondensatschläge hervorgerufen werden kann. Um dies zu vermeiden, sind im Rohrbündel 10, hier am Randbereich 11 des Rohrbündels 10, Ausgleichsvolumina 20 angeordnet. Diese Ausgleichsvolumina 20 erstrecken sich parallel oder zumindest im Wesentlichen parallel zu den Wärmetauscherrohren 12 durch das gesamte Rohrbündel 10, durchgehend vom unteren Rohrboden 4 bis zum oberen Rohrboden 3 und insbesondere auch durch die horizontale Stützwand 5. In der Stützwand 5 können die Ausgleichsvolumina 20 darüber hinaus sogar aufgeweitet sein und somit einen vergrößerten Querschnitt aufweisen. Durch dieses Durchgehen der Ausgleichsvolumina 20 durch die Stützwand 20 kann diese problemlos zur Stabilisierung des Rohrbündels 10 verwendet werden, wobei dadurch insbesondere auf einen Einsatz von kosten- und montageintensiven Gitterkonstruktionen verzichtet werden kann. Auch können die Ausgleichsvolumina 20 bevorzugt durch Auslassen eines oder mehrerer der Wärmetauscherrohre 12 des Rohrbündels 10 gebildet sein, wodurch in diesem Fall die Ausgleichsvolumina 20 einem Raum entsprechen, den diese ausgelassenen Wärmetauscherrohre 12 im homogenen Rohrbündel 10 eingenommen hätten. Insgesamt können durch diese Ausgleichsvolumina 20 die Dampfblasen, die im Kondensat entstehen, ungehindert bis zu einer Oberfläche des Kondensats aufsteigen. Dort können sie zerplatzen, ohne einen Kondensatschlag zu bewirken. Ein erfindungsgemäßer vertikaler Wärmetauscher 1 mit derartigen Ausgleichsvolumina 20 kann somit mit besonders hoher Sicherheit gegenüber einem Auftreten von Kondensatschlag betrieben werden.

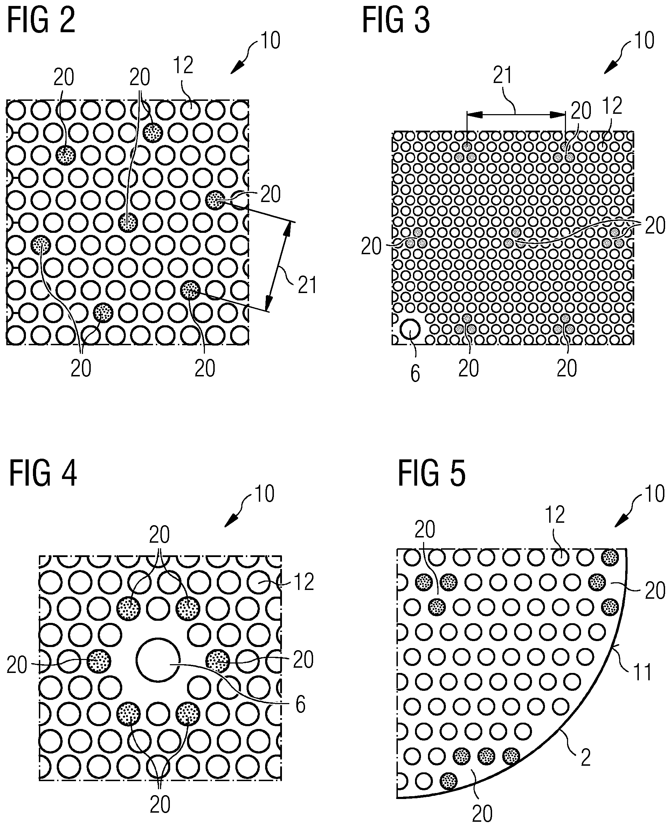

Die Fig. 2, 3, 4 und 5 zeigen verschiedene Ausgestaltungsmöglichkeiten von Anordnungen von Ausgleichsvolumina 20 in einem homogenen Rohrbündel 10, das selbst jeweils eine hexagonal-symmetrische Anordnung der Wärmetauscherrohre 12 aufweist. In jeder der gezeigten Ausgestaltungsformen werden dabei die jeweiligen Ausgleichsvolumina 20 durch ein Auslassen eines oder mehrerer der Wärmetauscherrohre 12 gebildet und nehmen somit einen Raum ein, der durch dieses Auslassen im Rohrbündel 10 frei wird. Das Wärmetauschvolumen 2 und der restliche gesamte erfindungsgemäße vertikale Wärmetauscher 1 ist in den Fig. 2, 3, 4 und 5 jeweils nicht mit abgebildet.

Dabei ist in Fig. 2 gezeigt, dass bereits durch ein Auslassen eines einzelnen Wärmetauscherrohrs 12 ein Raum für jeweils ein Ausgleichsvolumen 20 bereitgestellt werden kann. Ferner ist auch bereits in Fig. 2 sichtbar, dass diese Ausgleichsvolumina 20 bevorzugt ebenfalls gleichmäßig und homogen im Rohrbündel 10 verteilt angeordnet sind. Durch ein Einhalten eines maximalen Abstands 21 zwischen den Ausgleichsvolumina 20, der beispielsweise 5 bis 10 Durchmesser der Wärmetauscherrohre 12 betragen kann, kann dies erreicht werden. Auf diese Weise kann sichergestellt werden, dass unabhängig von einem Entstehungsort einer Dampfblase im Kondensat, die Dampfblase in ihrer Nähe immer ein Ausgleichsvolumen 20 zum ungestörten und unbehinderten Aufsteigen findet.

Die in Fig. 3 gezeigte Ausgestaltungsform unterscheidet sich von der in Fig. 2 gezeigten insbesondere dadurch, dass statt einem einzigen Wärmetauscherrohr 12 eine Gruppe von benachbarten Wärmetauscherrohren 12 zur Bereitstellung eines Raums für die jeweiligen Ausgleichsvolumina 20 ausgelassen wurden. Auf diese Weise kann besonders einfach ein größerer Raum für das jeweilige Ausgleichsvolumen 20 bereitgestellt werden. Auch in dieser Ausgestaltungsform sind die Ausgleichsvolumina 20 wiederum homogen und gleichmäßig im Rohrbündel 10 verteilt, wobei hier ein im Vergleich zu Fig. 2 etwas größerer Abstand 21 zwischen den Ausgleichsvolumina 20 gewählt wurde. Alle Vorteile, die in Bezug auf die in Fig. 2 gezeigte Ausgestaltungsform beschrieben worden sind, können somit auch mit der in Fig. 3 gezeigten Ausgestaltungsform bereitgestellt werden. Ferner ist im Rohrbündel 10 ein fester Einbau 6 gezeigt. Ein derartiger fester Einbau 6 kann dabei beispielsweise ein Zuganker oder eine Evakuierungsvorrichtung sein, die im Inneren des Wärmetauschvolumens 2 eines erfindungsgemäßen vertikalen Wärmetauschers 1 angeordnet sein kann.

In Fig. 4 ist gezeigt, dass auch eine Umgebung eines derartigen festen Einbaus 6 als Ort für Ausgleichsvolumina 20 verwendet werden kann. Dabei wird ausgenutzt, dass für den festen Einbau 6 bereits Wärmetauscherrohre 12 aus dem homogenen Rohrbündel 10 ausgelassen wurden. Der dabei frei werdende Raum im Rohrbündel 10 wir jedoch zumeist nicht vollständig vom jeweiligen festen Einbau 6 ausgefüllt. Beispielsweise durch ein zusätzliches Auslassen weiterer Wärmetauscherrohre 12, wie in Fig. 4 gezeigt, kann somit auf besonders einfache Art und Weise weiterer, zusätzlicher Raum für Ausgleichsvolumina 20 geschaffen werden.

Fig. 5 zeigt eine weitere mögliche Ausgestaltung von Ausgleichsvolumina 20 in einem homogenen Rohrbündel 10 eines vertikalen Wärmetauschers 1. Dabei können, wie in Fig. 5 abgebildet, derartige Ausgleichsvolumina 20 auch an einem Randbereich 11 des homogenen Rohrbündels 10 vorgesehen sein. Auch dies stellt im Sinne der Erfindung eine Anordnung im Inneren des Rohrbündels 10 dar. Auch hier können die Ausgleichsvolumina 20 Räume einnehmen, die ausgelassenen Wärmetauschrohren 12 entsprechen. Insbesondere kann dabei ausgenützt werden, dass oftmals der Randbereich 11 des Rohrbündels 10 der homogenen Verteilung der Wärmetauscherrohre 12 im Rohrbündel 10 nicht entspricht beziehungsweise angepasst ist, beispielsweise wie abgebildet bei einer hexagonal-symmetrischen Anordnung der Wärmetauscherrohre 12 im Rohrbündel 10 und einem zylindrischen Wärmetauschvolumen 2, das in Fig. 5 gestrichelt angedeutet ist. Dadurch entstehen am Randbereich 11 des homogenen Rohrbündels 10 automatisch Bereiche, in denen kein Wärmetauschrohr 12 mehr angeordnet werden kann. An diesen Bereichen können somit, beispielsweise durch ein zusätzliches Auslassen von Wärmetauschrohren 12, besonders einfach Ausgleichsvolumina 20 geschaffen werden.

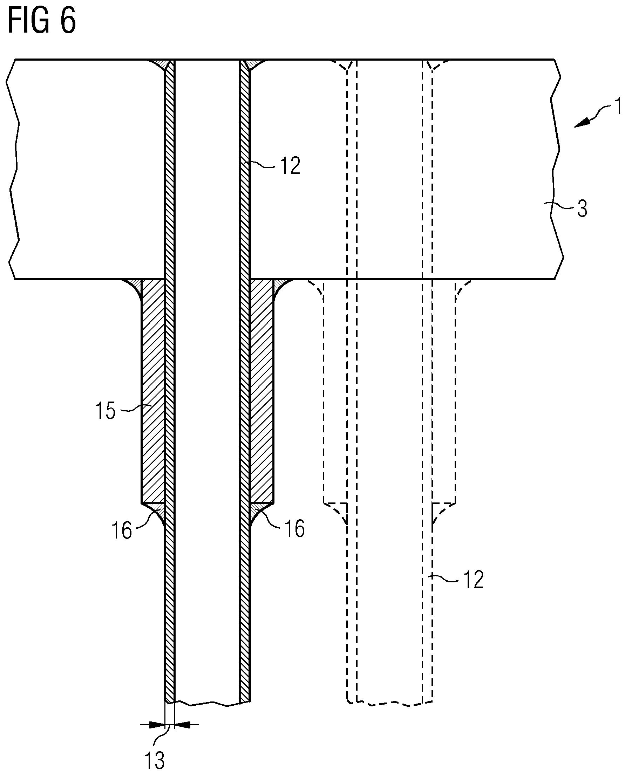

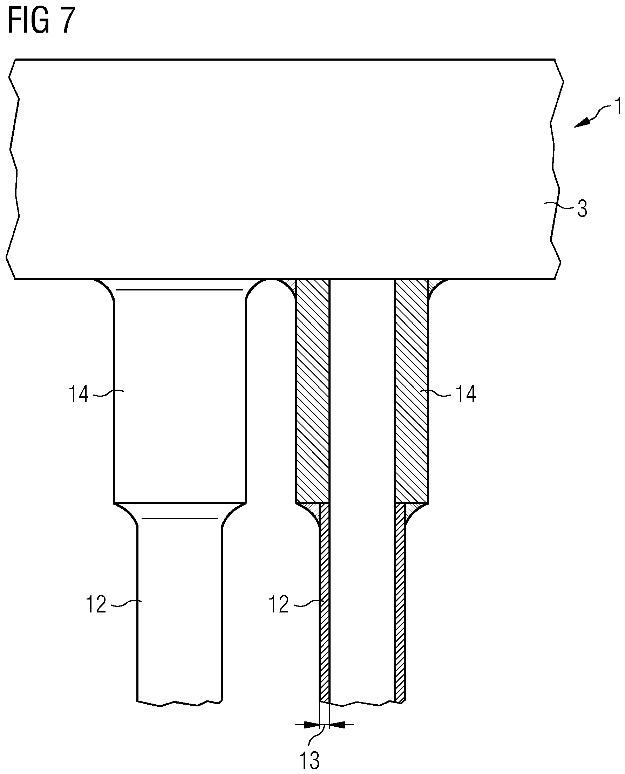

Die Fig. 6 und 7 zeigen Schutzmaßnahmen, die in einem erfindungsgemäßen Wärmetauscher 1 ergriffen werden können, um ein oberes Ende der Wärmetauscherrohre 12, das nahe am oberen Rohrboden 3 angeordnet ist, insbesondere vor einem Kondensatschlag zu schützen. Dies ist insbesondere in derartigen Wärmetauscher 1 sinnvoll, in denen ein Ansteigen des Kondensats bis an den Oberen Rohrboden 3 möglich oder sogar gewünscht ist. In diesem Fall nämlich können Dampfblasen, die durch Ausdampfungseffekte im Kondensat entstehen, bis zum oberen Rohrboden 3 aufsteigen und werden dort im Inneren des Kondensats zerplatzen und/oder implodieren, da ein weiteres Aufsteigen durch den oberen Rohrboden 3 nicht möglich ist. Eine Beschädigung der Wärmetauscherrohre 12 kann dadurch erfolgen.

In Fig. 6 ist eine erste Möglichkeit gezeigt, einen Schutz für diese oberen Enden der Wärmetauscherrohre 12 bereitzustellen. Dabei ist ein Schnittbild durch eines der Wärmetauscherrohre 12 gezeigt, wobei ein benachbartes Wärmetauscherrohr 12 gestrichelt angedeutet ist. Deutlich sichtbar in dieser Darstellung ist zudem, dass die Wärmetauscherrohre 12 durch den oberen Rohrboden 12 hindurchgehen. Erfindungsgemäß ist nun ein Verstärkungsrohr 15 vorgesehen, dass koaxial um das obere Ende des jeweiligen Wärmetauscherrohrs 12 angeordnet ist. Eine Befestigung des Verstärkungsrohrs 15 kann dabei beispielsweise durch ein Einwalzen in den oberen Rohrboden 3, ein hydraulisches Aufweiten beim Anordnen am jeweiligen Wärmetauscherrohr 12 oder ein Anschweißen am oberen Rohrboden 3 und/oder am jeweiligen Wärmetauscherrohr 12 erfolgen. Dabei ist bevorzugt vorgesehen, dass das Verstärkungsrohr 15 das jeweilige Wärmetauscherrohr 12 formschlüssig umfasst. Ein dennoch auftretender Zwischenraum (nicht mit abgebildet) zwischen dem Verstärkungsrohr 15 und dem jeweiligen Wärmetauscherrohr 12, der bevorzugt kleiner ist als 0,5mm, besonders bevorzugt kleiner ist als 0,2mm, kann am unteren Ende des Verstärkungsrohrs 15 mit einem geeigneten Verschlussmaterial 16, beispielsweise einem Lot oder einem Kunststoff, verschlossen werden. Dadurch kann sicher verhindert werden, dass eine Dampfblase im Kondensat in diesen Zwischenraum eindringt. Durch diese Maßnahme kann erreicht werden, dass eine Wandstärke 13 der Wärmetauscherrohre 12 lokal um einen Faktor 3 oder mehr vergrößert werden kann, ohne einen Innendurchmesser des jeweiligen Wärmetauscherrohrs 12 zu verkleinern. Eine Beschädigung der Wärmetauscherrohre 12 durch Kondensatschlag kann somit zuverlässig verhindert oder zumindest verringert werden, ohne einen Durchfluss des ersten Mediums in den Wärmetauscherrohren 12 zu behindern.

Fig. 7 zeigt eine weitere, alternative Möglichkeit, um der oben beschriebene Problematik von Kondensatschlägen am oberen Ende der Wärmetauscherrohre 12 zu begegnen. Dabei wird statt einem umfassenden Verstärkungsrohr 15 (nicht mit abgebildet) jeweils ein Zusatzrohr 14 axial anschließend an einem oberen Ende des jeweiligen Wärmetauscherrohrs 12 angeordnet, insbesondere angeschweißt. Das Zusatzrohr 14 überbrückt dabei jeweils vollständig einen Zwischenraum zwischen dem jeweiligen Wärmetauscherrohr 12 und dem oberen Rohrboden 3. Das Zusatzrohr 14 weist dabei eine größere Wandstärke auf als das jeweilige Wärmetauscherrohr 12 ohne jedoch einen inneren Querschnitt der Wärmetauscherrohre 12 zu verkleinern, wie exemplarisch in der Schnittansicht gezeigt. Auch dadurch kann lokal eine effektive Wandstärke 13 des Wärmetauscherrohrs 12 vergrößert, insbesondere um einen Faktor 3 oder mehr vergrößert, werden. Eine besonders bedarfsgerechte und/oder - anpassbare Verstärkung einer Wandstärke 13 der Wärmetauscherrohre 12 kann auf diese Weise bereitgestellt werden.

## Patentansprüche

1. Vertikaler Wärmetauscher (1), aufweisend ein Wärmetauschvolumen (2), das an entgegengesetzten Enden von einem oberen Rohrboden (3) und einem unteren Rohrboden (4) des Wärmetauschers (1) begrenzt ist, und ein homogenes Rohrbündel (10), wobei das Rohrbündel (10) eine Vielzahl von Wärmetauscherrohren (12), die zueinander regelmäßig angeordnet sind, aufweist und sich im Inneren des Wärmetauschvolumens (2) zwischen dem unteren Rohrboden (4) und dem oberen Rohrboden (3) erstreckt, wobei ferner die Wärmetauscherrohre (12) durch ein erstes Medium durchströmbar sind und im restlichen Wärmetauschvolumen (2) zumindest ein zweites Medium anordenbar ist, und wobei ein Wärmeaustausch zwischen dem ersten Medium und dem zweiten Medium durchführbar ist,
wobei im Rohrbündel (10) Ausgleichsvolumina (20) angeordnet sind, wobei die Ausgleichsvolumina (20) innerhalb des Rohrbündels (10) das Wärmetauschvolumen (2) durchziehen,
**dadurch gekennzeichnet, dass**
die Ausgleichsvolumina (20) Bereiche innerhalb des Rohrbündels (10) sind, die nicht von einem Wärmetauscherrohr (12) belegt sind und von dem zumindest einen zweiten Medium ausgefüllt werden können, und wobei zumindest eines der Ausgleichsvolumina (20) dem Raum eines Wärmetauscherrohrs (12) oder mehrerer, benachbart angeordneter Wärmetauscherrohre (12) im homogenen Rohrbündel (10) entspricht oder zumindest im Wesentlichen entspricht.

2. Vertikaler Wärmetauscher (1) nach einem der vorangegangenen Ansprüche,
**dadurch gekennzeichnet,**
**dass** das Rohrbündel (10) im Inneren des Wärmetauschvolumens (2) durch zumindest eine horizontale Stützwand (5) stabilisiert ist, wobei sich die Ausgleichsvolumina (20) durch die zumindest eine Stützwand (5) erstrecken.

3. Vertikaler Wärmetauscher (1) nach Anspruch 1 und 2,
**dadurch gekennzeichnet,**
**dass** die zumindest eine horizontale Stützwand (5) im Bereich der Ausgleichsvolumina (20) derart ausgebildet ist, dass die Ausgleichsvolumina (20) dort aufgeweitet sind, wobei zumindest eines der Ausgleichsvolumina (20) dem Raum mehrerer, benachbart angeordneter Wärmetauscherrohre (12) im homogenen Rohrbündel (10) entspricht oder zumindest im Wesentlichen entspricht.

4. Vertikaler Wärmetauscher (1) nach einem der vorangegangenen Ansprüche,
**dadurch gekennzeichnet,**
**dass** zumindest eines der Ausgleichsvolumina (20) benachbart zu einem festen Einbau (6), insbesondere einem Zuganker oder einer Evakuierungsvorrichtung, angeordnet ist.

5. Vertikaler Wärmetauscher (1) nach einem der vorangegangenen Ansprüche,
**dadurch gekennzeichnet,**
**dass** zumindest eines der Ausgleichsvolumina (20) an einem Randbereich (11) des Rohrbündels (10) angeordnet ist.

6. Vertikaler Wärmetauscher (1) nach einem der vorangegangenen Ansprüche,
**dadurch gekennzeichnet,**
**dass** ein Abstand (21) zwischen den Ausgleichsvolumina (20) auf einen Wert begrenzt ist, der einem 15-Fachen, bevorzugt einem 10-Fachen, besonders bevorzugt einem 5-Fachen eines Durchmessers der Wärmetauscherrohre (12) entspricht.

7. Vertikaler Wärmetauscher (1) nach einem der vorangegangenen Ansprüche,
**dadurch gekennzeichnet,**
**dass** die Ausgleichsvolumina (20) gleichmäßig oder zumindest im Wesentlichen gleichmäßig im Rohrbündel (10) verteilt sind.

8. Vertikaler Wärmetauscher (1) nach einem der vorangegangenen Ansprüche,
**dadurch gekennzeichnet,**
**dass** nahe am oberen Rohrboden (3) an einem oberen Ende der Wärmetauscherrohre (12) eine Wandstärke (13) der Wärmetauscherrohre (12) verstärkt ist, insbesondere um einen Faktor 3 oder mehr verstärkt ist, ohne einen inneren Querschnitt der Wärmetauscherrohre (12) zu verkleinern oder ohne einen inneren Querschnitt der Wärmetauscherrohre (12) zumindest im Wesentlichen zu verkleinern.

9. Vertikaler Wärmetauscher (1) nach Anspruch 8,
**dadurch gekennzeichnet,**
**dass** die Wandstärke (13) der Wärmetauscherrohre (12) auf einer Länge von mehr als 50mm, bevorzugt von mehr als 100mm, verstärkt ist.

10. Vertikaler Wärmetauscher (1) nach Anspruch 8 oder 9,
**dadurch gekennzeichnet,**
**dass** die Wandstärke (13) durch ein am Ende des jeweiligen Wärmetauscherrohrs (12) axial angeordnetes, insbesondere angeschweißtes, Zusatzrohr (14) verstärkt ist.

11. Vertikaler Wärmetauscher (1) nach Anspruch 8 oder 9,
**dadurch gekennzeichnet,**
**dass** die Wandstärke (13) des jeweiligen Wärmetauscherrohrs (12) durch ein Verstärkungsrohr (15) verstärkt ist, das koaxial zum jeweiligen Wärmetauscherrohr (12) angeordnet ist und dieses radial umfasst.

12. Vertikaler Wärmetauscher (1) nach Anspruch 11,
**dadurch gekennzeichnet,**
**dass** das jeweilige Verstärkungsrohr (15) kraft- und/oder stoffschlüssig in und/oder am jeweiligen Wärmetauscherrohr (12) und/oder am Rohrbündel (10) und/oder am oberen Rohrboden (3) befestigt ist.

13. Vertikaler Wärmetauscher (1) nach Anspruch 11 oder 12,
**dadurch gekennzeichnet,**
**dass** ein Zwischenraum zwischen dem Verstärkungsrohr (15) und dem jeweiligen Wärmetauscherrohr (12) kleiner ist als 0,5mm,
insbesondere kleiner 0,2mm, bevorzugt 0,0mm.

14. Vertikaler Wärmetauscher (1) nach Anspruch 13,
**dadurch gekennzeichnet,**
**dass** der Zwischenraum zwischen dem Verstärkungsrohr (15) und dem jeweiligen Wärmetauscherrohr (12) am unteren Ende des Verstärkungsrohrs (15) durch ein Verschlussmaterial (16), insbesondere einem Lot und/oder einem Kunststoff, verschlossen ist.

## Claims

1. Vertical heat exchanger (1) having a heat exchange volume (2) which is delimited at opposing ends by an upper pipe plate (3) and a lower pipe plate (4) of the heat exchanger (1), and a homogeneous pipe bundle (10), wherein the pipe bundle (10) has a large number of heat exchanger pipes (12) which are arranged in a regular manner with respect to each other and extends inside the heat exchange volume (2) between the lower pipe plate (4) and the upper pipe plate (3), wherein a first medium can further flow through the heat exchanger pipes (12) and at least one second medium can be arranged in the remaining heat exchange volume (2), and wherein a heat exchange can be carried out between the first medium and the second medium,
wherein
compensation volumes (20) are arranged in the pipe bundle (10), wherein the compensation volumes (20) within the pipe bundle (10) extend through the heat exchange volume (2), **characterized in that**
the compensation volumes (20) are regions inside the pipe bundle (10) which are not occupied by a heat exchanger pipe (12) and which can consequently be filled by the at least one second medium, and wherein at least one of the compensation volumes (20) corresponds or at least substantially corresponds to the space of a heat exchanger pipe (12) or a plurality of heat exchanger pipes (12) which are arranged beside each other in the homogeneous pipe bundle (10).

2. Vertical heat exchanger (1) according to the preceding claim,
**characterized in that**
the pipe bundle (10) is stabilized inside the heat exchange volume (2) by means of at least one horizontal support wall (5), wherein the compensation volumes (20) extend through the at least one support wall (5).

3. Vertical heat exchanger (1) according to Claim 1 and 2,
**characterized in that**
the at least one horizontal support wall (5) in the region of the compensation volumes (20) is constructed in such a manner that the compensation volumes (20) are expanded at that location, wherein at least one of the compensation volumes (20) corresponds or at least substantially corresponds to the space of a plurality of heat exchanger pipes (12) which are arranged beside each other in the homogeneous pipe bundle (10).

4. Vertical heat exchanger (1) according to any of the preceding claims,
**characterized in that**
at least one of the compensation volumes (20) is arranged adjacent to a fixed installation (6), in particular a tie rod or an evacuation device.

5. Vertical heat exchanger (1) according to any of the preceding claims,
**characterized in that**
at least one of the compensation volumes (20) is arranged at an edge region (11) of the pipe bundle (10).

6. Vertical heat exchanger (1) according to any of the preceding claims,
**characterized in that**
a spacing (21) between the compensation volumes (20) is limited to a value which corresponds to 15 times, preferably 10 times, particularly preferably 5 times, a diameter of the heat exchanger pipes (12).

7. Vertical heat exchanger (1) according to any of the preceding claims,
**characterized in that**
the compensation volumes (20) are distributed in a uniform manner or at least substantially in a uniform manner in the pipe bundle (10).

8. Vertical heat exchanger (1) according to any of the preceding claims,
**characterized in that**,
close to the upper pipe plate (3) on an upper end of the heat exchanger pipes (12), a wall thickness (13) of the heat exchanger pipes (12) is reinforced, in particular reinforced by a factor of 3 or more, without an inner cross-section of the heat exchanger pipes (12) being reduced or an inner cross-section of the heat exchanger pipes (12) being at least substantially reduced.

9. Vertical heat exchanger (1) according to Claim 8,
**characterized in that**
the wall thickness (13) of the heat exchanger pipes (12) is reinforced over a length of more than 50 mm, preferably more than 100 mm.

10. Vertical heat exchanger (1) according to Claim 8 or 9,
**characterized in that**
the wall thickness (13) is reinforced by means of an additional pipe (14) which is arranged axially on the end of the respective heat exchanger pipe (12) and which is in particular welded on.

11. Vertical heat exchanger (1) according to Claim 8 or 9,
**characterized in that**
the wall thickness (13) of the respective heat exchanger pipe (12) is reinforced by a reinforcement pipe (15) which is arranged coaxially with respect to the respective heat exchanger pipe (12) and which radially surrounds the latter.

12. Vertical heat exchanger (1) according to Claim 11,
**characterized in that**
the respective reinforcement pipe (15) is secured in a non-positively-locking and/or materially integral manner in and/or on the respective heat exchanger pipe (12) and/or on the pipe bundle (10) and/or on the upper pipe plate (3).

13. Vertical heat exchanger (1) according to Claim 11 or 12,
**characterized in that**
an intermediate space between the reinforcement pipe (15) and the respective heat exchanger pipe (12) is less than 0.5 mm, in particular less than 0.2 mm, preferably 0.0 mm.

14. Vertical heat exchanger (1) according to Claim 13,
**characterized in that**
the intermediate space between the reinforcement pipe (15) and the respective heat exchanger pipe (12) is closed at the lower end of the reinforcement pipe (15) by means of a closure material (16), in particular a solder and/or a plastics material.

## Revendications

1. Échangeur de chaleur vertical (1), comprenant un volume d'échange de chaleur (2), lequel est délimité à ses extrémités opposées par une plaque tubulaire supérieure (3) et une plaque tubulaire inférieure (4) de l'échangeur de chaleur (1), et un faisceau tubulaire homogène (10), dans lequel le faisceau tubulaire (10) comprend une pluralité de tubes d'échangeur de chaleur (12), lesquels sont disposés régulièrement les uns par rapport aux autres, et s'étend à l'intérieur du volume d'échange de chaleur (2) entre la plaque tubulaire inférieure (4) et la plaque tubulaire supérieure (3), dans lequel en outre les tubes d'échangeur de chaleur (12) peuvent être parcourus par un premier milieu et, dans le reste du volume d'échange de chaleur (2), au moins un deuxième milieu peut être disposé, et dans lequel un échange de chaleur entre le premier milieu et le deuxième milieu peut être mis en œuvre,
dans lequel des volumes de compensation (20) sont disposés dans le faisceau tubulaire (10), dans lequel les volumes de compensation (20) à l'intérieur du faisceau tubulaire (10) traversent le volume d'échange de chaleur (2),
**caractérisé**
**en ce que** les volumes de compensation (20) sont des zones à l'intérieur du faisceau tubulaire (10) qui ne sont pas recouvertes par un tube d'échangeur de chaleur (12) et peuvent être remplies par l'au moins un deuxième milieu, et dans lequel au moins l'un des volumes de compensation (20) correspond ou correspond au moins sensiblement à l'espace d'un tube d'échangeur de chaleur (12) ou de plusieurs tubes d'échangeur de chaleur (12) disposés de manière adjacente dans le faisceau tubulaire homogène (10).

2. Échangeur de chaleur vertical (1) selon l'une des revendications précédentes,
**caractérisé**
**en ce que** le faisceau tubulaire (10) est stabilisé à l'intérieur du volume d'échange de chaleur (2) par l'intermédiaire d'au moins une paroi de support horizontale (5), dans lequel les volumes de compensation (20) s'étendent à travers l'au moins une paroi de support (5).

3. Échangeur de chaleur vertical (1) selon la revendication 1 et la revendication 2,
**caractérisé**
**en ce que** l'au moins une paroi de support horizontale (5) est conçue dans la zone des volumes de compensation (20) de telle sorte que les volumes de compensation (20) y soient élargis, dans lequel au moins l'un des volumes de compensation (20) correspond ou correspond au moins sensiblement à l'espace de plusieurs tubes d'échangeur de chaleur (12) disposés de manière adjacente dans le faisceau tubulaire homogène (10).

4. Échangeur de chaleur vertical (1) selon l'une des revendications précédentes,
**caractérisé**
**en ce qu'**au moins l'un des volumes de compensation (20) est disposé de manière adjacente à une installation fixe (6), en particulier un tirant d'ancrage ou un dispositif d'évacuation.

5. Échangeur de chaleur vertical (1) selon l'une des revendications précédentes,
**caractérisé**
**en ce qu'**au moins l'un des volumes de compensation (20) est disposé au niveau d'une zone marginale (11) du faisceau tubulaire (10).

6. Échangeur de chaleur vertical (1) selon l'une des revendications précédentes,
**caractérisé**
**en ce qu'**une distance (21) entre les volumes de compensation (20) est limitée à une valeur qui correspond à 15 fois, de préférence 10 fois, de manière particulièrement préférée 5 fois un diamètre des tubes d'échangeur de chaleur (12).

7. Échangeur de chaleur vertical (1) selon l'une des revendications précédentes,
**caractérisé**
**en ce que** les volumes de compensation (20) sont répartis uniformément ou au moins sensiblement uniformément dans le faisceau tubulaire (10).

8. Échangeur de chaleur vertical (1) selon l'une des revendications précédentes,
**caractérisé**
**en ce que**, à proximité de la plaque tubulaire supérieure (3) sur une extrémité supérieure des tubes d'échangeur de chaleur (12), une épaisseur de paroi (13) des tubes d'échangeur de chaleur (12) est renforcée, en particulier est renforcée d'un facteur 3 ou plus, sans réduire une section transversale interne des tubes d'échangeur de chaleur (12) ou sans réduire au moins sensiblement une section transversale interne des tubes d'échangeur de chaleur (12).

9. Échangeur de chaleur vertical (1) selon la revendication 8,
**caractérisé**
**en ce que** l'épaisseur de paroi (13) des tubes d'échangeur de chaleur (12) est renforcée sur une longueur de plus de 50 mm, de préférence de plus de 100 mm.

10. Échangeur de chaleur vertical (1) selon la revendication 8 ou la revendication 9,
**caractérisé**
**en ce que** l'épaisseur de paroi (13) est renforcée par l'intermédiaire d'un tube supplémentaire (14) disposé, en particulier soudé, axialement sur l'extrémité du tube d'échangeur de chaleur (12) respectif.

11. Échangeur de chaleur vertical (1) selon la revendication 8 ou la revendication 9,
**caractérisé**
**en ce que** l'épaisseur de paroi (13) du tube d'échangeur de chaleur (12) respectif est renforcée par l'intermédiaire d'un tube de renforcement (15), lequel est disposé coaxialement par rapport au tube d'échangeur de chaleur (12) respectif et englobe celui-ci radialement.

12. Échangeur de chaleur vertical (1) selon la revendication 11,
**caractérisé**
**en ce que** le tube de renforcement (15) respectif est fixé à force et/ou par liaison de matière dans et/ou sur le tube d'échangeur de chaleur (12) respectif et/ou sur le faisceau tubulaire (10) et/ou sur la plaque tubulaire supérieure (3).

13. Échangeur de chaleur vertical (1) selon la revendication 11 ou la revendication 12,
**caractérisé**
**en ce qu'**un espace intermédiaire entre le tube de renforcement (15) et le tube d'échangeur de chaleur (12) respectif est inférieur à 0,5 mm, en particulier inférieur à 0,2 mm, de préférence 0,0 mm.

14. Échangeur de chaleur vertical (1) selon la revendication 13,
**caractérisé**
**en ce que** l'espace intermédiaire entre le tube de renforcement (15) et le tube d'échangeur de chaleur (12) respectif est fermé au niveau de l'extrémité inférieure du tube de renforcement (15) par l'intermédiaire d'un matériau de fermeture (16), en particulier d'une soudure et/ou d'une matière plastique.
